# EUROPÄISCHE PATENTSCHRIFT

(11) **EP 3 412 134 B1**
(45) Veröffentlichungstag und Bekanntmachung des Hinweises auf die Patenterteilung: **19.08.2020**
(21) Anmeldenummer: 17400034.9
(22) Anmeldetag: 09.06.2017
(51) Int. Cl.: A01D 34/00, G05D 1/02, A01B 69/04, H04W 4/021, H04W 56/00

(54) **BODENBEARBEITUNGSSYSTEM MIT EINEM ENDLOSEN BEGRENZUNGSDRAHT**
GROUND TREATMENT SYSTEM WITH AN ENDLESS LIMITING WIRE
SYSTÈME DE TRAITEMENT DE SOL COMPRENANT UN CÂBLE PÉRIPHÉRIQUE CONTINU

(43) Veröffentlichungstag der Anmeldung: 12.12.2018
(73) Patentinhaber: Andreas Stihl AG & Co. KG, 71336 Waiblingen (DE)
(72) Erfinder: Matt, Sebastian, 6330 Kufstein (AT); Zöttl, Samuel, 6092 Birgitz (AT); Ritzer, Peter, 6341 Ebbs (AT)
(74) Vertreter: Wasmuth, Rolf

(56) Entgegenhaltungen:
- EP-A2- 2 945 037
- WO-A1-03/104908
- WO-A1-2014/158060
- DE-U1-202013 101 894
- Anonymous: "Husqvarna Automower 230ACX Reviews - ProductReview.com.au", , 18. Mai 2016 (2016-05-18), XP055425034, Gefunden im Internet: URL:https://www.productreview.com.au/p/hus qvarna-automower-230acx-220ac-210c/m/230ac x.html [gefunden am 2017-11-14]
- Anonymous: "Rasenmäher Roboter Signalverstärker", , 17. Mai 2016 (2016-05-17), XP055425027, Gefunden im Internet: URL:https://web.archive.org/web/2016051700 3655/http://robomaeher.de/blog/rasenmaher- roboter-signalverstarker/ [gefunden am 2017-11-14]

## Beschreibung

Die Erfindung betrifft ein Bodenbearbeitungssystem aus mindestens einem selbstfahrenden Bodenbearbeitungsgerät, wobei das Bodenbearbeitungsgerät einen Antrieb, eine Steuereinheit und einen Akku zur Energieversorgung des Bodenbearbeitungsgerätes aufweist. Das Bodenbearbeitungsgerät arbeitet innerhalb eines Arbeitsbereichs, der durch einen Begrenzungsdraht umgeben ist. Innerhalb des Arbeitsbereichs fährt das Bodenbearbeitungsgerät einen durch eine Steuereinheit bestimmten Fahrweg ab.

Ein derartiges aus der WO 2014/158060 A1 bekanntes Bodenbearbeitungssystem weist mindestens eine erste Basisstation auf, die als Ladestation für den Akku des Bodenbearbeitungsgerätes ausgebildet und elektrisch an den Begrenzungsdraht angeschlossen ist. Die erste Basisstation ist ausgebildet ein Signal zu generieren und auf dem Begrenzungsdraht zu senden. Das elektromagnetische Feld des gesendeten Drahtsignals induziert in einer Empfangsspule des Bodenbearbeitungsgerätes ein Empfangssignal. Das Bodenbearbeitungsgerät ist eingerichtet, das Empfangssignal in einer Steuereinheit zu verarbeiten und zur Bestimmung des Fahrweges zu nutzen.

Die Begrenzung des Arbeitsbereichs durch einen Begrenzungsdraht hat sich in der Praxis bewährt. Immer größer werdende Arbeitsbereiche werden funktionssicher durch einen Begrenzungsdraht begrenzt und in einem derart umschlossenen Arbeitsbereich nicht nur ein einzelnes Bodenbearbeitungsgerät eingesetzt, sondern mehrere Bodenbearbeitungsgeräte betrieben. Allerdings ist aufgrund der technischen und physikalischen Gegebenheiten die maximal mögliche Länge eines in einer Drahtschleife verlegten Begrenzungsdrahtes begrenzt. Wird der Begrenzungsdraht länger ausgeführt, muss ein sehr starkes Signal gesendet werden, mit dem auch in entfernten Bereichen der Basisstation eine ordnungsgemäße Steuerung der Bodenbearbeitungsgeräte sicher möglich ist. Bei einem Betrieb eines Bodenbearbeitungssystems sind ferner gesetzliche Anforderungen zu erfüllen. So dürfen die gesendeten Signale nicht beliebig stark sein, da deren elektromagnetisches Feld andere, z. B. benachbarte Bodenbearbeitungssysteme in ihrer Funktion beeinträchtigen können.

Der Erfindung liegt die Aufgabe zugrunde, die Drahtschleife eines Begrenzungsdrahtes derart auszubilden, dass auch in von der das Drahtsignal generierenden und sendenden Basisstation weit entfernten Bereichen ein funktionssicherer Betrieb eines Bodenbearbeitungsgerätes möglich ist

Die Aufgabe wird nach den Merkmalen des Anspruchs 1 gelöst.

Der Begrenzungsdraht ist elektrisch mit einer weiteren Basisstation verbunden, die als weitere Ladestation für den Akku des Bodenbearbeitungsgerätes ausgebildet ist. Diese weitere Basisstation ist als Repeater ausgebildet. Die weitere Basisstation ist dazu eingerichtet, das von der ersten Basisstation auf einem zuführenden Drahtabschnitt gesendete Signal zu empfangen, aufzubereiten und auf einem weiterführenden Drahtabschnitt der Drahtschleife zu senden. Es ist ausreichend, auf dem Drahtabschnitt bis zur weiteren Basisstation ein Signal mit geringer Stärke zu senden, so dass eine Beeinträchtigung benachbarter Bodenbearbeitungssysteme sicher vermieden werden kann.

Die Länge des Drahtabschnittes zwischen der ersten Basisstation als MASTER und der weiteren Basisstation als SLAVE kann so ausgelegt werden, dass über die gesamte Länge des Drahtabschnittes ein Signal ausreichender Signalstärke und/oder Signalform anliegt, welches eine fehlerfreie Steuerung der Bodenbearbeitungsgeräte über die gesamte Länge des Drahtabschnittes gewährleistet.

Nach einer ersten weiteren Basisstation als SLAVE können beliebig viele weitere Basisstationen als weitere SLAVE'S in die Drahtschleife des Begrenzungsdrahtes eingeschleift werden, wobei die Länge der Drahtabschnitte zwischen den Basisstationen jeweils derart gewählt ist, dass eine fehlerfreie Steuerung der Bodenbearbeitungsgeräte im Bereich der sukzessive aufeinanderfolgenden Drahtabschnitte sichergestellt ist.

Durch die Verwendung weiterer Basisstationen als SLAVE können die Signale beliebig oft "repeatet" werden, so dass theoretisch eine Drahtschleife mit unbegrenzter Gesamtlänge möglich wird. Durch die Anordnung von weiteren Basisstationen als Repeater ist das zur Steuerung der Bodenbearbeitungsgeräte gesendete Signal im gesamten Arbeitsbereich sicher zu empfangen.

In einer einfachen Ausführungsform der Erfindung ist die Drahtschleife zumindest einmal unterbrochen verlegt. Die unterbrochene Drahtschleife bildet am Ort der Unterbrechung eine elektrische Trennstelle. Die Anschlussenden der Trennstelle werden durch eine Sende-/Empfangseinheit der als Repeater arbeitenden Basisstation elektrisch miteinander verbunden, so dass die Drahtschleife über ihre gesamte Länge elektrisch kontaktiert ist.

In der als Repeater arbeitenden weiteren Basisstation empfängt die Sende-/Empfangseinheit das gesendete Signal über einen zuführenden Drahtabschnitt des Begrenzungsdrahtes, bereitet es elektrisch auf, um es als aufbereitetes elektrisches Signal über einen weiterführenden Drahtabschnitt des Begrenzungsdrahtes weiter zu senden.

In einer ersten Form der Aufarbeitung des empfangenen Signals kann dessen Amplitude elektrisch verstärkt werden. Alternativ oder zusätzlich kann die weitere Basisstation das empfangene Signal auch in seiner Signalform aufbereiten.

Die Sende-/Empfangseinheit einer weiteren Basisstation ist durch eine Empfangseinheit und eine Sendeeinheit gebildet. In einfacher Weise kann an einer Basisstation z. B. ein Schalter bedient werden, um die Basisstation als "MASTER" oder als "SLAVE", vorteilhaft in der Arbeitsweise eines Repeaters zu betreiben.

Vorteilhaft entscheidet die Basisstation elektronisch selbstständig, ob sie als SLAVE oder MASTER betrieben wird. So kann beispielhaft beim Einschalten der Basisstation überprüft werden, ob ein Signal an der Empfangseinheit anliegt. Liegt kein Signal an der Empfangseinheit der Basisstation an, wird die Basisstation als MASTER arbeiten und über eine Sendeeinheit der Basisstation ein vorgegebenes, insbesondere gespeichertes Signal auf den Begrenzungsdraht senden.

Liegt bei einer Inbetriebnahme der Basisstation hingegen an der Empfangseinheit der Basisstation ein Eingangssignal an, wird die Basisstation ihren Betrieb als SLAVE aufnehmen und das an der Empfangseinheit der Basisstation empfangene Signal aufbereiten und als aufbereitetes Signal auf den Begrenzungsdraht weitersenden. Dieser Betrieb der Basisstation wird auch als Repeaterbetrieb bezeichnet.

In bevorzugter Ausgestaltung des Bodenbearbeitungssystems ist vorgesehen, dass alle Basisstationen des Bodenbearbeitungssystems gleich ausgebildet sind.

Eine bevorzugte Ausführungsform des Bodenbearbeitungsgerätes ist die Ausführung als selbstfahrender Rasenmäher.

Für einen stabilen Betrieb des Bodenbearbeitungssystems ist insbesondere vorgesehen, das von der weiteren Basisstation über den weiterführenden Drahtabschnitt gesendete Signal mit dem über den zuführenden Drahtabschnitt empfangenen Signal zeitlich zu synchronisieren. Ein Bodenbearbeitungsgerät innerhalb des Arbeitsbereichs empfängt immer nur ein gesendetes Signal der Drahtschleife. Unabhängig von dem Ort des Empfangs sind die empfangenen Signale zeitlich synchronisiert.

Weitere vorteilhafte Ausführungsbeispiele der Erfindung ergeben sich durch beliebige Kombination der angegebenen Merkmale und der beschriebenen Ausführungsbeispiele.

Weitere Merkmale der Erfindung ergeben sich aus den weiteren Ansprüchen, der Beschreibung und der Zeichnung, in der nachfolgend im Einzelnen beschriebene Ausführungsbeispiele der Erfindung dargestellt sind. Es zeigen:
- Fig. 1: in schematischer Darstellung ein Bodenbearbeitungssystem mit zumindest einem in einem Arbeitsbereich selbstfahrenden Bodenbearbeitungsgerät,
- Fig. 2: in schematischer Darstellung den Aufbau eines Bodenbearbeitungsgerätes am Beispiel eines selbstfahrenden Rasenmähers.

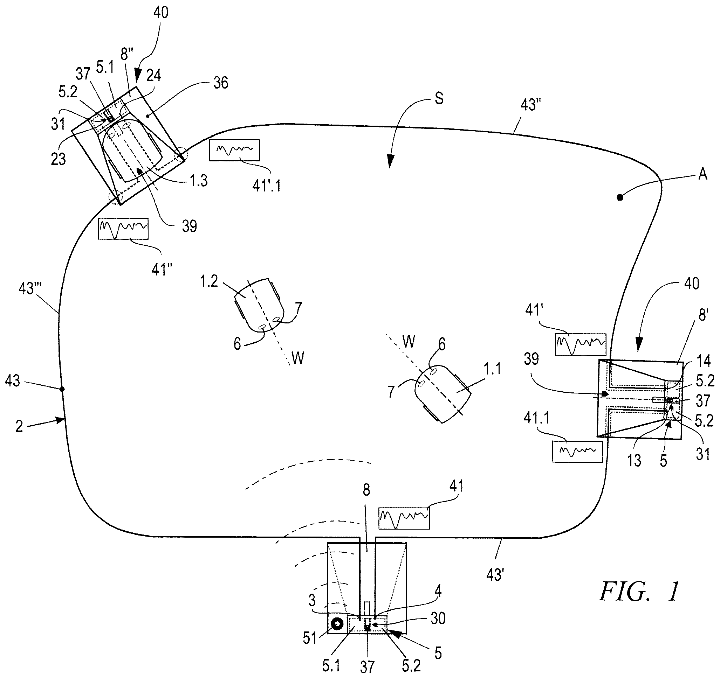

Das in Fig. 1 dargestellte Bodenbearbeitungssystem S umfasst zumindest ein selbstfahrendes Bodenbearbeitungsgerät 1.1, 1.2 oder 1.3 zur Bearbeitung eines vorgegebenen Arbeitsbereichs A. Im Ausführungsbeispiel sind mehrere, insbesondere drei Bodenbearbeitungsgeräte 1.1, 1.2 und 1.3 zur gemeinsamen Bearbeitung des vorgegebenen Arbeitsbereiches A gezeigt. Das Bodenbearbeitungssystem S kann weniger oder auch mehr Bodenbearbeitungsgeräte umfassen. Jedes einzelne Bodenbearbeitungsgerät 1.1, 1.2 und 1.3 arbeitet autonom und fährt innerhalb des Arbeitsbereichs A selbstständig einen zufälligen, vorgegebenen oder selbstständig geplanten Fahrweg W ab.

Im gezeigten Ausführungsbeispiel nach Fig. 1 ist der Arbeitsbereich A des Bodenbearbeitungssystems S durch einen Begrenzungsdraht 43 bestimmt. Der gezeigte Begrenzungsdraht 43 ist als insbesondere mehrfach getrennte Drahtschleife 2 verlegt, wobei die primären Enden 3 und 4 des Begrenzungsdrahtes 43 an eine Basisstation 8 angeschlossen sind. Die Basisstation 8 sendet - bevorzugt in zeitlich festen Abständen - ein elektrisches Signal 41 auf den Begrenzungsdraht 43. Die auf dem Begrenzungsdraht 43 gesendeten elektrischen Signale 41 werden von Empfangsspulen 6 und 7 eines im Arbeitsbereich A fahrenden Bodenbearbeitungsgerätes 1.1 bis 1.3 empfangen.

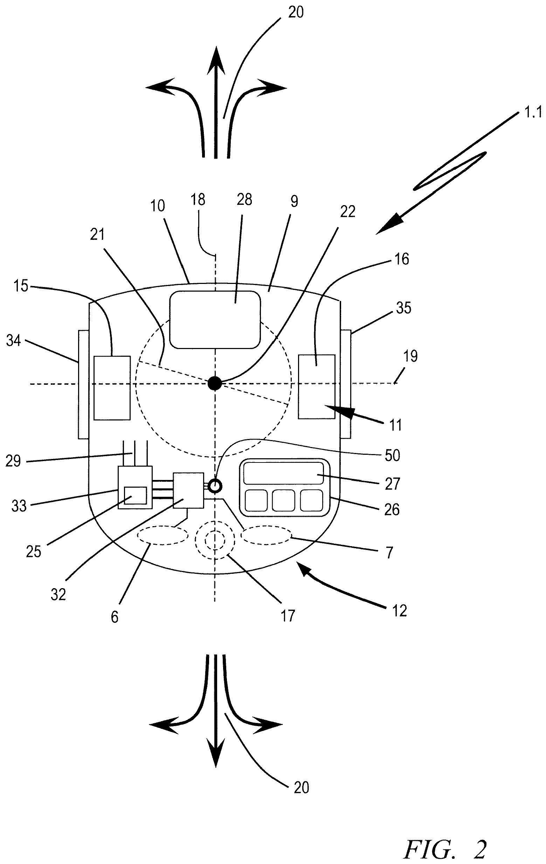

In Fig. 2 ist in Draufsicht schematisch ein Bodenbearbeitungsgerät 1.1 gezeigt, welches als Rasenmäher 10 ausgebildet ist. Die Darstellung des autonom arbeitenden, selbstfahrenden Rasenmähers 10 ist beispielhaft. Das Bodenbearbeitungsgerät 1.1 kann auch als Vertikutierer, Kehrmaschine, Staubsauger, autonom fahrender Aufsitzmäher oder dgl. Bodenbearbeitungsgerät ausgebildet sein.

Das in Fig. 2 als Rasenmäher 10 dargestellte Bodenbearbeitungsgerät 1.1 besteht im Wesentlichen aus einem Fahrwerk mit hinteren Antriebsrädern 34, 35 und einem Antrieb 11. Im gezeigten Ausführungsbeispiel ist jedem Antriebsrad 34, 35 ein elektrischer Antriebsmotor 15, 16 zugeordnet, so dass die Antriebsräder 34 und 35 zur Richtungssteuerung des Rasenmähers 10 mit unterschiedlicher Drehzahl und/oder in unterschiedlichen Drehrichtungen angetrieben werden können. Der Antrieb 11 besteht aus zwei voneinander unabhängig ansteuerbaren Elektromotoren.

Im vorderen Bereich 12 des Gehäuses 9 des Rasenmähers 10 ist ein insbesondere selbstlenkendes drittes Rad 17 vorgesehen. Das dritte Rad 17 liegt vorzugsweise auf einer Längsmittelachse 18 des Gehäuses 9 des Bodenbearbeitungsgerätes 1.1. Die Ausbildung eines Fahrgestells mit vier Rädern kann zweckmäßig sein. Die Antriebsräder 34, 35 des gezeigten Bodenbearbeitungsgerätes 1.1 drehen um eine gemeinsame Antriebsachse 19. Die Antriebsachse 19 liegt - in Draufsicht auf den Rasenmäher 10 nach Fig. 2 - insbesondere rechtwinklig zur Längsmittelachse 18 des Gehäuses 9. Für eine Geradeausfahrt sind die Antriebsräder 34 und 35 über ihre elektrischen Antriebsmotoren 15 und 16 synchron anzutreiben. Für eine Kurvenfahrt werden die Antriebsräder 34 und 35 durch ihre Antriebsmotoren 15 und 16 z. B. mit unterschiedlichen Drehzahlen angetrieben. Durch den Antrieb 11 ist das Bodenbearbeitungsgerät 1.1 in jeder gewünschten Fahrtrichtung 20 gemäß den dargestellten Pfeilen vorwärts oder rückwärts zu bewegen. Im Ausführungsbeispiel nach Fig. 2 weist das Bodenbearbeitungsgerät 1.1 zwischen den Antriebsrädern 34, 35 ein Arbeitswerkzeug 21 auf. Im Ausführungsbeispiel als Rasenmäher 10 ist das Arbeitswerkzeug 21 ein um eine senkrechte Drehachse 22 rotierendes Schneidmesser.

Die Steuerung der elektrischen Antriebsmotoren 15 und 16 erfolgt über eine Steuereinheit 33, die über schematisch angedeutete elektrische Leitungen 29 mit den elektrischen Antriebsmotoren 15 und 16 verbunden ist.

Das auf der Drahtschleife 2 des Begrenzungsdrahtes 43 gesendete Signal 41 wird in den Empfangsspulen 6 und 7 des Bodenbearbeitungsgerätes 1.1 empfangen. Die Empfangsspulen 6 und 7 liegen im vorderen Bereich 12 des Gehäuses 9 jeweils auf einer Seite der Längsmittelachse 18 des Bodenbearbeitungsgerätes 1.1. Die in den Empfangsspulen 6 und 7 induzierten Empfangssignale werden einer gemeinsamen Auswerteeinheit 32 zugeführt, die mit der Steuereinheit 33 verbunden ist.

Vorteilhaft umfasst die Steuereinheit 33 einen Speicher 25 für eine Betriebsvariable, die zum Betrieb des Bodenbearbeitungsgerätes 1.1 zweckmäßig ist. Eine derartige Betriebsvariable kann z. B. die Startzeit des Betriebs, die Dauer des Betriebs, die Schnitthöhe (bei einer Ausbildung als Rasenmäher), der Fahrweg zu einer Ladestation, ein Mähplan als Wochenplan oder dgl. Betriebsvariable sein.

Wie Fig. 2 zeigt, ist zur Eingabe von Informationen zur Betriebsvariablen durch den Benutzer vorteilhaft ein Eingabefeld 26 vorgesehen, welches vorteilhaft einen Bildschirm 27 und Eingabetasten aufweist. Es kann zweckmäßig sein, den Bildschirm als Touchscreen auszubilden, so dass Eingabetasten entfallen können.

Ein Bodenbearbeitungsgerät 1.1 kann ferner einen zusätzlichen Empfänger 50 aufweisen, der drahtlos mit einem Stationssender 51 z.B. der Basisstation 8 kommuniziert. Der Stationssender 51 kommuniziert über den Empfänger 50 mit jedem einzelnen Bodenbearbeitungsgerät 1.1, 1.2 und 1.3. Dabei können Daten nicht nur vom Stationssender 51 zum Empfänger 50 übermittelt werden; zweckmäßig ist der Stationssender 51 als Sender/Empfänger und der Empfänger 50 des Bodenbearbeitungsgerätes 1.1 als Sender/Empfänger ausgebildet, so dass eine Kommunikation vom Stationssender 51 zum Empfänger 50 sowie vom Empfänger 50 zum Stationssender 51 möglich ist. Diese drahtlose Kommunikationsverbindung zwischen einem Stationssender 51 und einem Empfänger 50 ist vorteilhaft als Funkstrecke oder dgl. ausgebildet. Mögliche Funkstrecken können WLAN-Verbindungen, Bluetooth-Verbindungen, GSM-Verbindungen, NFC-Verbindungen, Infrarot-Verbindungen oder dgl. drahtlose Verbindungen sein. Auch eine Infrarot-Verbindung kann zweckmäßig sein.

Die elektrische Versorgung der Steuereinheit 33 und all ihrer Komponenten, die elektrische Versorgung des elektrischen Antriebs 11 sowie die elektrische Versorgung des Empfängers 50 wird durch einen bordeigenen Akku 28 des Bodenbearbeitungsgerätes 1.1 gewährleistet. Der Akku 28 ist bevorzugt in das Gehäuse 9 des Bodenbearbeitungsgerätes 1.1 eingeschoben.

Im Betrieb des Bodenbearbeitungssystems S werden die Bodenbearbeitungsgeräte 1.1, 1.2 und 1.3 voneinander unabhängig in dem zu bearbeitenden Arbeitsbereich A durch entsprechende Ansteuerung der Antriebsmotoren 15 und 16 verfahren. Jedes einzelne Bodenbearbeitungsgerät 1.1, 1.2 und 1.3 arbeitet autonom entsprechend den Informationen einer Betriebsvariablen in seinem Speicher 25. Jedes einzelne Bodenbearbeitungsgerät 1.1, 1.2 und 1.3 fährt autonom innerhalb des Arbeitsbereichs A selbstständig einen zufälligen, vorgegebenen oder selbstständig geplanten Fahrweg W ab.

Der als geschlossene Drahtschleife 2 verlegte Begrenzungsdraht 43 weist über seine Länge mindestens eine Trennstelle 39 auf. Im gezeigten Ausführungsbeispiel nach Fig. 2 sind in der Drahtschleife 2 zwei Trennstellen 39 ausgebildet.

An der ersten Trennstelle 39 wird der Begrenzungsdraht 43 mechanisch aufgetrennt, so dass sich Anschlussenden 13 und 14 ergeben. An der Trennstelle 39 ist eine erste weitere Basisstation 8' vorgesehen, die mit einer Sende-/Empfangseinheit 5 ausgebildet ist. Das Anschlussende 13 des zuführenden Drahtabschnittes 43' ist mit einer Empfangseinheit 5.1 der Sende-/Empfangseinheit 5 verbunden. Über den zuführenden Drahtabschnitt 43' ist die Empfangseinheit 5.1 mit der ersten Basisstation 8 elektrisch verbunden.

Das zweite Anschlussende 14 ist an einem weiterführenden Drahtabschnitt 43" vorgesehen, der mit einer Sendeeinheit 5.2 der Sende-/Empfangseinheit 5 verbunden ist. Die Sendeeinheit 5.2 sendet auf dem weiterführenden Drahtabschnitt 43" der Drahtschleife 2 des Begrenzungsdrahtes 43 ein aufbereitetes Signal 41' weiter.

An der zweiten Trennstelle 39 ist eine weitere Basisstation 8" angeordnet. Die weitere Trennstelle 39 ist durch eine elektrische Auftrennung des Begrenzungsdrahtes 43 gebildet, wodurch sich Anschlussenden 23 und 24 ergeben. Das Anschlussende 24 der zweiten Trennstelle 39 ist an dem zuführenden Drahtabschnitt 43" ausgebildet und mit einer Empfangseinheit 5.1 einer Sende-/Empfangseinheit 5 verbunden. Somit steht die Sendeeinheit 5.2 der ersten weiteren Basisstation 8' über den Drahtabschnitt 43" mit der Empfangseinheit 5.1 der zweiten weiteren Basisstation 8" in Verbindung. Das andere Anschlussende 23 der Trennstelle 39 ist an dem weiterführenden Drahtabschnitt 43'" ausgebildet und ist mit einer Sendeeinheit 5.2 der zweiten weiteren Basisstation 8" verbunden. Im gezeigten Ausführungsbeispiel ist die Sendeeinheit 5.2 der zweiten weiteren Basisstation 8" über den Drahtabschnitt 43'" mit der Sende-/Empfangseinheit 5 der Basisstation 8 verbunden. Die Drahtschleife 2 aus den Drahtabschnitten 43', 43" und 43'" ist geschlossen.

Vorteilhaft sind alle Basisstationen 8, 8' und 8" der Drahtschleife 2 gleich ausgebildet. Jede Basisstation 8, 8', 8" weist eine Sende-/Empfangseinheit 5 aus einer Empfangseinheit 5.1 und einer Sendeeinheit 5.2 auf. Um eine Basisstation als MASTER oder als SLAVE zu betreiben, kann zweckmäßig ein Schalter 37 vorgesehen sein. Ist der Schalter in Schalterstellung 30, wird die Basisstation als MASTER betrieben, wie z. B. die Basisstation 8. Um eine Basisstation als SLAVE zu betreiben, ist der Schalter 37 in Schalterstellung 31 zu verstellen, wie z. B. die Basisstationen 8' und 8".

Vorteilhaft ist eine Basisstation 8, 8', 8" derart ausgebildet, dass die Basisstation 8, 8', 8" selbstständig entscheidet, ob sie als SLAVE oder MASTER betrieben wird. So kann beispielhaft beim Einschalten der Basisstation 8, 8', 8" von der Sende-/Empfangseinheit 5 überprüft werden, ob ein Signal 41 an der Empfangseinheit 5.1 anliegt. Liegt kein Signal an der Empfangseinheit 5.1 der Basisstation 8, 8', 8" an, wird die Basisstation 8, 8', 8" als MASTER betrieben und über eine Sendeeinheit 5.2 der Basisstation 8, 8', 8" ein vorgegebenes, insbesondere gespeichertes Signal 41 auf den Begrenzungsdraht 43 gesendet.

Liegt bei einer Inbetriebnahme einer Basisstation 8, 8', 8" hingegen an der Empfangseinheit 5.1 der Basisstation 8, 8', 8" ein Eingangssignal an, wird die Basisstation 8, 8', 8" ihren Betrieb als SLAVE aufnehmen und das an der Empfangseinheit 5.1 der Basisstation 8, 8', 8" empfangene Signal aufbereiten und als aufbereitetes Signal 41 auf den Begrenzungsdraht 43 weitersenden. Dieser Betrieb der Basisstation 8, 8', 8" wird auch als Repeaterbetrieb bezeichnet.

Dabei kann ferner vorgesehen sein, dass die erste Basisstation 8 und die weiteren Basisstationen 8', 8" auch als Ladestationen 36 ausgebildet sind, über die der Akku 28 des Bodenbearbeitungsgerätes 1.1, 1.2 oder 1.3 aufgeladen wird. In Fig. 1 ist das Bodenbearbeitungsgerät 1.3 in seiner Ladestellung in der Ladestation 36 der Basisstation 8" dargestellt.

Nach der Erfindung ist vorgesehen, dass die erste Basisstation 8 in der Stellung 30 als MASTER arbeitet, während die weiteren Basisstationen 8' und 8" in der Schalterstellung 31 als SLAVE betrieben werden. Dabei ist die Ausgestaltung so vorgesehen, dass die als SLAVE geschalteten weiteren Basisstationen 8' und 8" als Repeater 40 betrieben werden. In der Betriebsweise Repeater wird das empfangene Signal 41.1, 41'.1 aufbereitet und anschließend weiter gesendet.

Die Sendeeinheit 5.2 der Basisstation 8 sendet auf das Ende 4 der Drahtschleife 2 ein Signal 41, welches über den Drahtabschnitt 43' des Begrenzungsdrahtes 43 zur weiteren Basisstation 8' gesendet wird. Das in der ersten weiteren Basisstation 8' über den zuführenden Drahtabschnitt 43' gesendete Signal 41 wird von der Empfangseinheit 5.1 der weiteren Basisstation 8' als Signal 41.1 empfangen. Diese weitere Basisstation 8' arbeitet als Repeater 40 und wird das von der ersten Basisstation 8 gesendete Signal 41 aufbereiten und über die Sendeeinheit 5.2 als aufbereitetes Signal 41' auf dem weiterführenden Drahtabschnitt 43" des Begrenzungsdrahtes 43 der Drahtschleife 2 weitersenden. Das aufbereitete Signal 41' ist über den weiterführenden Drahtabschnitt 43" des Begrenzungsdrahtes 43 zur zweiten weiteren Basisstation 8" geführt und wird dort in der Empfangseinheit 5.1 empfangen. In der Sende-/Empfangseinheit 5 der zweiten weiteren Basisstation 8" wird das empfangene Signal 41'.1 aufbereitet und über die Sendeeinheit 5.2 wieder auf einen weiterführenden Drahtabschnitt 43'" des Begrenzungsdrahtes 43 der Drahtschleife 2 ausgegeben. Das von der zweiten, weiteren Basisstation 8" gesendete aufbereitete Signal 41" wird über den Drahtabschnitt 43'" des Begrenzungsdrahtes 43'" zurück zur Basisstation 8 geführt.

In den weiteren Basisstationen 8' und 8" kann das jeweils empfangene Signal 41.1 bzw. 41'.1 verstärkt werden, um über die gesamte Länge des Begrenzungsdrahtes 43 ein gleichmäßig starkes Signal 41, 41' und 41" zu senden. Das empfangene Signal 41.1 bzw. 41'.1 kann in seiner Amplitude elektrisch verstärkt werden. Zweckmäßig ist das empfangene Signal 41.1, 41'.1 zusätzlich oder alternativ in seiner Signalform aufbereitet und verstärkt.

Durch die Anordnung einer Basisstation 8 als MASTER und zumindest einer weiteren Basisstation 8' und 8" als SLAVE in der Betriebsform REPEATER besteht für den Benutzer die theoretische Möglichkeit, eine Drahtschleife 2 unbegrenzter Gesamtlänge zu verlegen. Über den Verlauf der Drahtschleife 2 werden an geeigneter Stelle Trennstellen 39 vorgesehen und weitere Basisstationen 8', 8" eingeschleift. Diese weiteren Basisstationen 8', 8" werden vorzugsweise ausschließlich als Repeater 40 betrieben, d. h., sie empfangen das auf den zuführenden Drahtabschnitt 43' bzw. 43" gesendete Signal 41, 41', bereiten dieses auf und geben es als zweckmäßig in der Amplitude und/oder Signalform aufbereitetes Signal über einen weiterführenden Drahtabschnitt 43", 43'" weiter. Theoretisch ist so die Ausbildung einer Drahtschleife 2 beliebiger Gesamtlänge möglich.

Zur Abarbeitung eines geeigneten Mähplans können die Bodenbearbeitungsgeräte 1.1, 1.2, 1.3 über einen Empfänger 50 mit einem externen Server oder dgl. kommunizieren. Durch Senden und Empfangen von Daten teilt jedes einzelne Bodenbearbeitungsgerät 1.1, 1.2 und 1.3 einer Zentrale z. B. den Arbeitsfortschritt, seine zurückgelegten Fahrwege und/oder seine elektrische Belastung mit. Die Zentrale kann so jedes einzelne Bodenbearbeitungsgerät 1.1, 1.2, 1.3 zielgerichtet steuern und die Gesamtbetriebszeit zur Bearbeitung des Arbeitsbereichs A optimieren.

## Patentansprüche

1. Bodenbearbeitungssystem aus mindestens einem selbstfahrenden Bodenbearbeitungsgerät (1.1, 1.2, 1.3), wobei das Bodenbearbeitungsgerät (1.1, 1.2, 1.3) einen Antrieb (11), eine Steuereinheit (33) und einen Akku (28) zur Energieversorgung des Bodenbearbeitungsgerätes (1.1, 1.2, 1.3) aufweist, und mit einem durch einen Begrenzungsdraht (43) umgebenen Arbeitsbereich (A), wobei das Bodenbearbeitungsgerät (1.1, 1.2, 1.3) eingerichtet ist, in dem Arbeitsbereich (A) einen durch die Steuereinheit (33) bestimmten Fahrweg (W) abzufahren, und mit mindestens einer ersten als Ladestation (36) für den Akku (28) des Bodenbearbeitungsgerätes (1.1, 1.2, 1.3) ausgebildeten Basisstation (8), die elektrisch an den Begrenzungsdraht (43) angeschlossen ist und ausgebildet ist, ein Signal (41) zu generieren, das im Bodenbearbeitungsgerät (1.1, 1.2, 1.3) ein Empfangssignal induziert, und das Bodenbearbeitungsgerät (1.1, 1.2, 1.3) eingerichtet ist, das Empfangssignal zu verarbeiten,
**dadurch gekennzeichnet, dass** der Begrenzungsdraht (43) elektrisch mit einer weiteren als Ladestation (36) für den Akku (28) des Bodenbearbeitungsgerätes (1.1, 1.2, 1.3) ausgebildeten Basisstation (8') verbunden ist, dass die weitere Basisstation (8') als Repeater (40) ausgebildet und dazu eingerichtet ist, das von der ersten Basisstation (8) gesendete Signal (41) zu empfangen, aufzubereiten und weiterzugeben.

2. Bodenbearbeitungssystem nach Anspruch 1,
**dadurch gekennzeichnet, dass** der Begrenzungsdraht (43) als zumindest einmal unterbrochene Drahtschleife (2) verlegt ist.

3. Bodenbearbeitungssystem nach Anspruch 1,
**dadurch gekennzeichnet, dass** die Drahtschleife (2) zumindest eine elektrische Trennstelle (33) aufweist, und die Anschlussenden (13, 14; 23, 24) der Trennstelle (33) durch eine Sende-/Empfangseinheit (5) in der weiteren Basisstation (8', 8") elektrisch verbunden sind.

4. Bodenbearbeitungssystem nach Anspruch 3,
**dadurch gekennzeichnet, dass** die Sende-/Empfangseinheit (5) der weiteren Basisstation (8', 8") ausgebildet ist, das gesendete Signal (41) über einen Drahtabschnitt (43', 43", 43"') des Begrenzungsdrahtes (43) zu empfangen und als aufbereitetes elektrisches Signal (41', 41") weiterzusenden.

5. Bodenbearbeitungssystem nach Anspruch 1,
**dadurch gekennzeichnet, dass** die weitere Basisstation (8', 8") ausgebildet ist, das über einen Drahtabschnitt (43', 43", 43"') empfangene Signal (41.1, 41'.1) in seiner Amplitude elektrisch zu verstärken.

6. Bodenbearbeitungssystem nach Anspruch 1,
**dadurch gekennzeichnet, dass** die weitere Basisstation (8', 8") ausgebildet ist, das über einen Drahtabschnitt (43', 43", 43"') empfangene Signal (41.1, 41'.1) in seiner Signalform aufzubereiten.

7. Bodenbearbeitungssystem nach Anspruch 1,
**dadurch gekennzeichnet, dass** jede Basisstation (8', 8") eine Empfangseinheit (5.1) und eine Sendeeinheit (5.2) aufweist.

8. Bodenbearbeitungssystem nach Anspruch 7,
**dadurch gekennzeichnet, dass** eine Basisstation (8', 8") ausgebildet ist als MASTER zu arbeiten und über eine Sendeeinheit (5.2) der Sende-/Empfangseinheit (5) ein vorgegebenes Signal (41) auf den Begrenzungsdraht (43) zu senden, wenn an der Empfangseinheit (5.1) der Sende-/Empfangseinheit (5) der Basisstation (8', 8") kein Eingangssignal anliegt.

9. Bodenbearbeitungssystem nach Anspruch 7,
**dadurch gekennzeichnet, dass** eine Basisstation (8', 8") ausgebildet ist als SLAVE und Repeater (40) zu arbeiten, wenn an der Empfangseinheit (5.1) der Sende-/Empfangseinheit (5) ein Eingangssignal anliegt, wobei eine Sendeeinheit (5.2) der Sende-/Empfangseinheit (5) ausgebildet ist, das Empfangssignal aufzubereiten und als aufbereitetes Signal (41) auf den Begrenzungsdraht (43) zu senden.

10. Bodenbearbeitungssystem nach Anspruch 1,
**dadurch gekennzeichnet, dass** alle Basisstationen (8, 8', 8") des Bodenbearbeitungssystems (S) gleich ausgebildet sind.

11. Bodenbearbeitungssystem nach Anspruch 1,
**dadurch gekennzeichnet, dass** das Bodenbearbeitungsgerät (1.1, 1.2, 1.3) ein selbstfahrender Rasenmäher (10) ist.

12. Bodenbearbeitungssystem nach Anspruch 1,
**dadurch gekennzeichnet, dass** die weitere Basisstation (8', 8") ausgebildet ist, das gesendete Signal (41', 41") mit dem empfangenen Signal (41.1, 41'.1) zeitlich zu synchronisieren.

## Claims

1. Ground working system consisting of at least one self-propelled ground working implement (1.1, 1.2, 1.3), wherein the ground working implement (1.1, 1.2, 1.3) has a drive (11), a control unit (33) and a battery (28) for the energy supply of the ground working implement (1.1, 1.2, 1.3), and having a working area (A) surrounded by a boundary wire (43), wherein ground working implement (1.1, 1.2, 1.3) is designed to travel a route (W) determined by the control unit (33) in the working area (A), and having at least one first base station (8), which is designed as charging station (36) for the battery (28) of the ground working implement (1.1, 1.2, 1.3), is electrically connected to the boundary wire (43) and is designed to generate a signal (41) inducing a received signal in the ground working implement (1.1, 1.2, 1.3), the ground working implement (1.1, 1.2, 1.3) being arranged to process the received signal,
**characterised in that** the boundary wire (43) is electrically connected to a further base station (8') designed as charging station (36) for the battery (28) of the ground working implement (1.1, 1.2, 1.3), **in that** the further base station (8') is designed as a repeater (40) and arranged to receive, condition and relay the signal (41) transmitted by the first base station (8).

2. Ground working system according to claim 1,
**characterised in that** the boundary wire (43) is routed as a wire loop (2) which is interrupted at least once.

3. Ground working system according to claim 1,
**characterised in that** the wire loop (2) has at least one electric disconnection point (33) and the connecting ends (13, 14; 23, 24) of the disconnection point (33) are electrically connected by a transmit-receive unit (5) in the further base station (8', 8").

4. Ground working system according to claim 3,
**characterised in that** the transmit-receive unit (5) of the further base station (8', 8") is designed to receive the transmitted signal (41) via a wire section (43', 43", 43"') of the boundary wire (43) and to retransmit it as a conditioned electric signal (41', 41").

5. Ground working system according to claim 1,
**characterised in that** the further base station (8', 8") is designed to amplify the signal (41.1, 41'.1) received via a wire section (43', 43", 43'") electrically in its amplitude.

6. Ground working system according to claim 1,
**characterised in that** the further base station (8', 8") is designed to condition the signal (41.1, 41'.1) received via a wire section (43', 43", 43'") in its signal form.

7. Ground working system according to claim 1,
**characterised in that** each base station (8', 8") has a receiving unit (5.1) and a transmitting unit (5.2).

8. Ground working system according to claim 7,
**characterised in that** one base station (8', 8") is designed to operate as MASTER and to transmit a predefined signal (41) to the boundary wire (43) via a transmitting unit (5.2) of the transmit-receive unit (5) if no input signal is present at the receiving unit (5.1) of the transmit-receive unit (5) of the base station (8', 8").

9. Ground working system according to claim 7,
**characterised in that** one base station (8', 8") is designed to operate as SLAVE and repeater (40) if an input signal is present at the receiving unit (5.1) of the transmit-receive unit (5), a transmitting unit (5.2) of the transmit-receive unit (5) being designed to condition the received signal and transmit it to the boundary wire (43) as conditioned signal (41).

10. Ground working system according to claim 1,
**characterised in that** all base stations (8. 8', 8") of the ground working system (S) are designed identically.

11. Ground working system according to claim 1,
**characterised in that** the ground working implement (1.1, 1.2, 1.3) is a self-propelled lawnmower (10).

12. Ground working system according to claim 1,
**characterised in that** the further base station (8', 8") is designed to synchronise the transmitted signal (41', 41") in time with the received signal (41.1, 41'.1).

## Revendications

1. Système de travail du sol composé d'au moins un appareil de travail du sol à conduite autonome (1.1, 1.2, 1.3), dans lequel l'appareil de travail du sol (1.1, 1.2, 1.3) présente un entraînement (11), une unité de commande (33) et un accumulateur (28) pour l'alimentation en énergie de l'appareil de travail du sol (1.1, 1.2, 1.3), et comprenant une zone de travail (A) entourée d'un câble périphérique (43), dans lequel l'appareil de travail du sol (1.1, 1.2, 1.3) est installé pour parcourir dans la zone de travail (A) un chemin (W) déterminé par l'unité de commande (33), et comprenant au moins une première station de base (8) qui est conformée en tant que station de charge (36) pour l'accumulateur (28) de l'appareil de travail du sol (1.1, 1.2, 1.3), qui est raccordée électriquement au câble de délimitation (43) et qui est conformée pour générer un signal (41) qui induit dans l'appareil de travail du sol (1.1, 1.2, 1.3) un signal de réception, et l'appareil de travail du sol (1.1, 1.2, 1.3) est configuré pour traiter le signal de réception,
**caractérisé en ce que** le câble de délimitation (43) est relié électriquement à une autre station de base (8'), conformée en tant que station de charge (36) pour l'accumulateur (28) de l'appareil de travail du sol (1.1, 1.2, 1.3), que l'autre station de base (8') est conformée en tant que répéteur (40) et est installée pour recevoir, traiter et retransmettre le signal (41) envoyé par la première station de base (8).

2. Système de travail du sol selon la revendication 1,
**caractérisé en ce que** le câble de délimitation (43) est posé comme boucle de câble (2) interrompue au moins une fois.

3. Système de travail du sol selon la revendication 1,
**caractérisé en ce que** la boucle de câble (2) comporte au moins un emplacement de rupture électrique (33), et les extrémités de raccordement (13, 14 ; 23, 24) de l'emplacement de rupture (33) sont reliées électriquement par une unité d'émission/réception (5) dans l'autre station de base (8', 8").

4. Système de travail du sol selon la revendication 3,
**caractérisé en ce que** l'unité d'émission/réception (5) de l'autre station de base (8', 8") est conformée pour recevoir le signal envoyé (41) par l'intermédiaire d'une section de câble (43', 43", 43'") du câble de délimitation (43) et pour le retransmettre en tant que signal électrique traité (41', 41").

5. Système de travail du sol selon la revendication 1,
**caractérisé en ce que** l'autre station de base (8', 8") est conformée pour renforcer électriquement en amplitude le signal (41.1, 41'.1) reçu par l'intermédiaire d'une section de câble (43', 43", 43'").

6. Système de travail du sol selon la revendication 1,
**caractérisé en ce que** l'autre station de base (8', 8") est conformée pour traiter dans sa forme de signal le signal (41.1, 41'.1) reçu par l'intermédiaire d'une section de câble (43', 43", 43'").

7. Système de travail du sol selon la revendication 1,
**caractérisé en ce que** chaque station de base (8', 8") comporte une unité de réception (5.1) et une unité d'émission (5.2).

8. Système de travail du sol selon la revendication 7,
**caractérisé en ce qu'**une station de base (8', 8") est conformée pour fonctionner en tant que MAÎTRE et pour envoyer sur le câble de délimitation (43) un signal prédéfini (41) par l'intermédiaire d'une unité d'émission (5.2) de l'unité d'émission/réception (5) si aucun signal d'entrée n'est appliqué à l'unité de réception (5.1) de l'unité d'émission/réception (5) de la station de base (8', 8").

9. Système de travail du sol selon la revendication 7,
**caractérisé en ce qu'**une station de base (8', 8") est conformée pour fonctionner en tant qu'ESCLAVE et répéteur (40) si un signal d'entrée est appliqué à l'entrée de réception (5.1) de l'unité d'émission/réception (5), dans lequel une unité d'émission (5.2) de l'unité d'émission/réception (5) est conformée pour traiter le signal de réception et l'envoyer en tant que signal traité (41) au câble de délimitation (43).

10. Système de travail du sol selon la revendication 1,
**caractérisé en ce que** toutes les stations de base (8, 8', 8") du système de traitement de sol (S) sont conformées de la même manière.

11. Système de travail du sol selon la revendication 1,
**caractérisé en ce que** l'appareil de travail du sol (1.1, 1.2, 1.3) est une tondeuse à gazon à conduite autonome (10).

12. Système de travail du sol selon la revendication 1,
**caractérisé en ce que** l'autre station de base (8', 8") est conformée pour synchroniser dans le temps le signal émis (41', 41") avec le signal reçu (41.1., 41'.1).
